# EUROPÄISCHE PATENTSCHRIFT

(11) **EP 1 966 582 B1**
(45) Veröffentlichungstag und Bekanntmachung des Hinweises auf die Patenterteilung: **18.11.2009**
(21) Anmeldenummer: 06841072.9
(22) Anmeldetag: 20.12.2006
(51) Int. Cl.: G01M 13/02

(54) **MESSUNG VON MOMENTENGLEICHFÖRMIGKEIT AN MEHRSCHEIBENKUPPLUNGEN**
MEASUREMENT OF THE UNIFORMITY OF MOMENTS ON MULTI-PLATE CLUTCHES
MESURE DE L'HOMOGENEITE DE COUPLE POUR DES EMBRAYAGES A DISQUES MULTIPLES

(30) Priorität: 23.12.2005 DE 102005062413; 20.12.2006 DE 102006060922
(43) Veröffentlichungstag der Anmeldung: 10.09.2008
(73) Patentinhaber: BorgWarner, Inc., Auburn Hills, MI 48326 (US)
(72) Erfinder: RITSCHEL, Michael, 76709 Kronau (DE); MOCH, Ludwig, 76709 Kronau (DE); SCHÄFER, Michael, 68775 Ketsch (DE)
(74) Vertreter: Neunert, Peter Andreas
(86) Internationale Anmeldenummer: PCT/EP2006/012332
(87) Internationale Veröffentlichungsnummer: WO 2007/076935

(56) Entgegenhaltungen:
- EP-A2- 0 493 840
- DE-A1- 3 601 708
- GB-A- 2 223 076
- JP-A- 56 098 631
- US-A- 5 038 601
- US-A- 5 982 280
- US-A1- 2005 126 272

## Beschreibung

Die Erfindung betrifft ein Verfahren zur Messung der Momentengleichförmigkeit von schaltbaren Reibkupplungssystemen, wobei das einzelne Reibkupplungssystem einen antriebsseitigen Adapter und mindestens einen abtriebsseitigen Adapter aufweist sowie ein Messsystem zur Messung der Momentengleichförmigkeit von schaltbaren Reibkupplungssystemen, wie aus der US 2005/0 126 272 A1 bekannt.

Aus der DE 199 34 486 A1 ist ein Verfahren zur Prüfung eines automatischen Getriebes einschließlich seiner Schaltelemente bekannt. Hierfür wird das gesamte Getriebe mit der angebauten Kupplung und den Bremsen auf einen Prüfstand gesetzt und mittels kleiner Leistung angetrieben. Der Abtrieb wird mit einer Drehmomentmessnabe simuliert.

Die Aufgabe der vorliegenden Erfindung ist es, ein Messverfahren und ein Messsystem für eine Reibkupplungssystem zu entwickeln, mit der das Reibkupplungssystem vor seinem Anbau an ein Getriebe gemessen und geprüft werden kann.

Diese Aufgabe wird mit den Merkmalen des Hauptanspruchs gelöst. Dazu wird das Reibkupplungssystem in eine Messvorrichtung eingesetzt, wobei die Messvorrichtung mit einer ersten Aufnahmevorrichtung den antriebsseitigen Adapter aufnimmt und mit einer weiteren Aufnahmevorrichtung den abtriebsseitigen Adapter umgreift. Eine der Aufnahmevorrichtungen ist mit einem Antriebsmotor verbunden. Die Messvorrichtung umfasst mindestens eine Momentenmessvorrichtung. Die die Antriebskraft des Antriebsmotors reibschlüssig übertragenden Kupplungslamellen werden mittels einer Vorspannvorrichtung, die eine Prüfkraft erzeugt, aneinander gepresst. Der Antriebsmotor wird mit einer Prüfdrehzahl angetrieben. Innerhalb eines Zeitintervalls wird das mittels des Reibkupplungssystems übertragene Drehmoment des Antriebsmotors mittels der Momentenmessvorrichtung gemessen. Die Wiederholfrequenz von Drehmomentenschwankungen über das Zeitintervall wird in Abhängigkeit der Drehzahl des Antriebsmotors ermittelt.

Das Messsystem umfasst mindestens eine Messvorrichtung. Die einzelne Messvorrichtung umfasst mindestens zwei Aufnahmevorrichtungen. Eine der Aufnahmevorrichtungen der jeweiligen Messvorrichtung ist mit einem Antriebsmotor verbunden. Außerdem umfasst die einzelne Messvorrichtung eine Momentenmessvorrichtung und eine Vorspannvorrichtung zur gegensinnigen Belastung der beiden Aufnahmevorrichtungen. Das Messsystem umfasst mindestens eine Auswertevorrichtung, die die Wiederholfrequenz von Drehmomentenschwankungen über das Zeitintervall in Abhängigkeit der Drehzahl des Antriebsmotors ermittelt.

Weitere Einzelheiten der Erfindung ergeben sich aus den Unteransprüchen und der nachfolgenden Beschreibung schematisch dargestellter Ausführungsformen.
- Figur 1:: Doppelwellenkupplung;
- Figur 2:: Manuell betätigte Kupplungsmessmaschine;
- Figur 3:: Automatisiertes Messsystem.

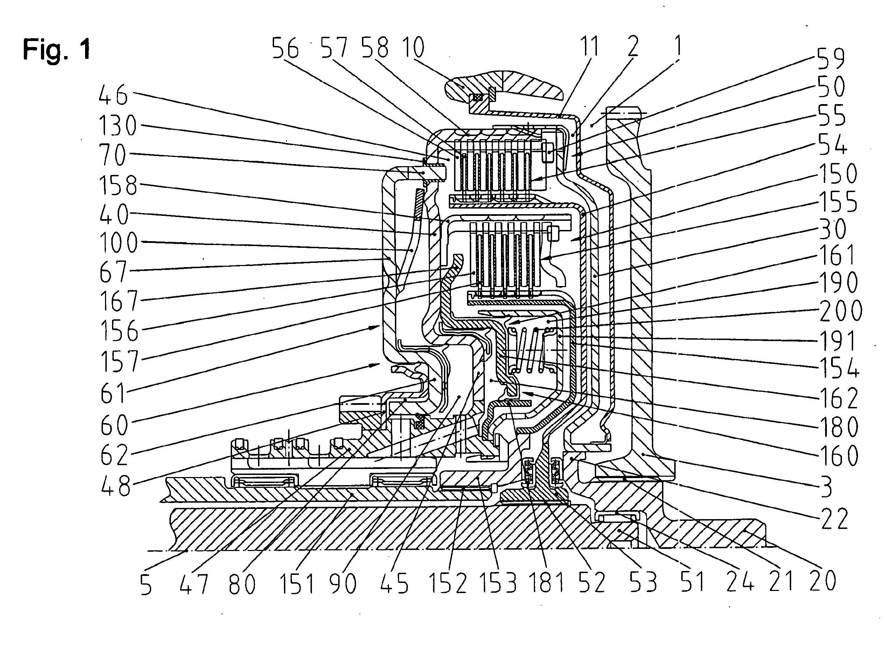

In der Figur 1 ist als Beispiel eines schaltbaren Reibkupplungssystems 300 eine Doppelwellenkupplung 300 eines Kraftfahrzeugs dargestellt. Die Doppelwellenkupplung umfasst zwei flüssigkeitsgeschmierte Reibkupplungen 50, 150. Diese kraftschlüssigen Schaltkupplungen haben zwei radial hintereinander angeordnete Lamellenpakete 55, 155. Demnach sitzt das erste Lamellenpaket 55 auf einem größeren Radius als das zweite 155. Die beiden Kupplungen 50, 150 werden hydraulisch geschlossen. Das Lösen der einzelnen Kupplung 50, 150 erfolgt über Federelemente und/oder hydraulisch über entsprechende Zylinder-Kolben-Einheiten. Die Federelemente 100, 200 sind z.B. mechanische Federn wie Schraubenfedern und/oder Membranfedern. Dieses Kupplungssystem wird in der Regel in Personenkraftwagen eingesetzt.

Das Kupplungssystem sitzt beispielsweise zwischen einem mehrwelligen Schaltgetriebe und dem Antriebsmotor des Fahrzeugs. Der Antriebsmotor ist in der Regel ein Otto- oder Dieselmotor. Zwischen dem Antriebsmotor und dem Kupplungssystem ist oft ein Ein- oder Zweimassenschwungrad 3 montiert.

Das Motordrehmoment gelangt von der Kurbelwelle auf das Schwungrad 3, vgl. Figur 1. Letzteres sitzt über eine drehstarre Wellen-Naben-Verbindung 21 auf der Kupplungseingangswelle 20. Hinter der Wellen-Naben-Verbindung 21 verbreitert sich die Kupplungseingangswelle 20 zur Ausbildung eines Mitnehmerscheibensitzes 22. Auf dem Mitnehmerscheibensitz 22 ist die Mitnehmerscheibe 30 befestigt.

Die z.B. tiefgezogene Mitnehmerscheibe 30 ist mit einem Außenlamellenträger 40 drehstarr verbunden. Letzterer hat zwei ringförmige Lamellentragabschnitte 58 und 158. Der Außenlamellenträger 40, der beispielsweise ein im Stanz- und Tiefziehverfahren hergestelltes Blechteil ist, ist an einer Hauptnabe 47 befestigt. Die Kombination aus Kupplungseingangswelle 20, Mitnehmerscheibe 30, Außenlamellenträger 40 und Hauptnabe 47 rotiert mit der Motordrehzahl. Diese Teile 20, 30, 40, 47 befinden sich - bei dem Ausführungsbeispiel - im andauernden Eingriff mit der Kurbelwelle des Antriebsmotors.

Die Kupplungseingangswelle 20 hat eine zentrale Bohrung 24, in der wälzgelagert eine erste Getriebeeingangswelle 51 gelagert ist. Auf dieser Getriebeeingangswelle 51 ist über eine Wellen-Naben-Verbindung 52 ein erster Lamellenträgerflansch 53 angeordnet. Am Lamellenträgerflansch 53 ist ein erster topfförmiger Lamellenträger 54 angeschweißt. Zwischen dem ersten Lamellenträger 54 und dem äußeren Lamellentragabschnitt 58 des Außenlamellenträgers 40 sind die Lamellen 56, 57 der ersten Kupplung 50 angeordnet. Dabei greifen die Außenlamellen 56 formschlüssig in die Profilierung des äußeren Lamellentragabschnittes 58 ein. Die Außenlamellen 56 sind an diesem Lamellentragabschnitt 58 drehsteif aber längsverschieblich gelagert. Die zwischen den Außenlamellen 56 sitzenden Innenlamellen 57 sind auf vergleichbare Weise mit der Profilierung des ersten Innenlamellenträgers 54 verbunden.

Der Außenlamellenträger 40 bildet zusammen mit der Hauptnabe 47 einen Ringzylinder 45 aus. Nach Figur 1 ist nach links seitlich versetzt zum Ringzylinder 45 an der Hauptnabe 47 eine im Teilquerschnitt im Wesentlichen u-förmige Zylinderaußenwand 48 starr angeordnet. Zwischen der Zylinderaußenwand 48 und dem Ringzylinder 45 ist ein aus Tiefziehblech geformter, erster Ringkolben 61 angeordnet. Der Ringkolben 61 hat einen Kolbenabschnitt 62 und einen Kraftübertragungsabschnitt 67. Zwischen dem Kolbenabschnitt 62 und der Zylinderaußenwand 48 befindet sich ein erster Arbeitsraum 80.

Dieser Arbeitsraum 80 wird mit Drucköl beaufschlagt, um den Kraftübertragungsabschnitt 67 gegen das erste Lamellenpaket 55 zu pressen. Dazu greift der Kraftübertragungsabschnitt 67 über Zungen 70 in den Innenraum 46 des Außenlamellenträgers 40 ein. Bei betätigter erster Kupplung 50 pressen die Zungen 70 das Lamellenpaket 55 gegen einen im Außenlamellenträger 40 fixierten Anschlag 59. Im gekuppelten Zustand wird die Kupplungseingangswelle 20 über den Außenlamellenträger 40 und den ersten Innenlamellenträger 54 mit der ersten Getriebeeingangswelle 51 verbunden. Eines der auf dieser Welle 51 angeordneten Gangräder kämmt dann kraftübertragend mit einem Gangrad auf der Getriebeausgangswelle. Die Gangräder und die Getriebeausgangswelle sind in Figur 1 nicht dargestellt.

Zwischen dem Kraftübertragungsabschnitt 67 und dem Außenlamellenträger 40 sitzt als Rückstellelement eine Membranfeder 100. Sie löst bei einer Druckentlastung des ersten Arbeitsraumes 80 den Kraftübertragungsabschnitt 67 vom ersten Lamellenpaket 55.

In der Hauptnabe 47 ist eine zweite Getriebeeingangswelle 151 z.B. über zwei Nadellager gelagert. Diese als Hohlwelle ausgebildete Getriebeeingangswelle 151 umgibt zumindest bereichsweise die erste Getriebeeingangswelle 51. Am vorderen - zur Kupplungseingangswelle 20 hin orientierten - Wellenende befindet sich eine Wellen-Naben-Verbindung 152, über die ein zweiter Lamellenträgerflansch 153 drehstarr auf der zweiten Getriebeeingangswelle 151 angeordnet ist. Auf dem Lamellenträgerflansch 153 ist der Innenlamellenträger 154 der zweiten Kupplung 150 befestigt.

Zwischen diesem zweiten Innenlamellenträger 154 und dem ersten Innenlamellenträger 54 ist ein innerer Lamellentragabschnitt 158 angeordnet. Er ist am Außenlamellenträger 40 angeschweißt. Der zweite Innenlamellenträger 154 und der Außenlamellenträger 40 fixieren das zweite Lamellenpaket 155 in bekannter Weise.

Innerhalb des Bauraumes des zweiten Innenlamellenträgers 154 ist eine an der Hauptnabe 47 befestigte Ausgleichsraumbegrenzungswandung 191 angeordnet. Die Begrenzungswandung 191 hat die Form eines einen zweiten Ausgleichsraum 190 auf drei Seiten umgebenden Ringkanals.

Zwischen dem Ausgleichsraum 190 und dem Außenlamellenträger 40 ist ein zweiter Ringkolben 161 angeordnet. Der in einen Kolbenabschnitt 162 und einen Betätigungsabschnitt 167 aufgeteilte Ringkolben 161 drückt - beim Einkuppeln - mit dem Betätigungsabschnitt 167 auf das zweite Lamellenpaket 155.

Der Kolbenabschnitt 162 schließt einen zweiten Arbeitsraum 180 ab, der durch den Außenlamellenträger 40 und einen Zylinderring 181 gebildet wird. Er ist hierbei gegenüber beiden Bauteilen 40, 181 mittels Lippendichtringen abgedichtet. Der Kolbenabschnitt 62 des ersten Ringkolbens 61 hat vergleichbare Dichtungen. Der Zylinderring 181 ist ebenfalls auf der Hauptnabe 47 befestigt. Der Ringkolben 161 ist auch gegenüber dem Ausgleichsraum 190 abgedichtet.

Wird die zweite Kupplung 150 betätigt, wird bei sich öffnender erster Kupplung 50 der Außenlamellenträger 40 mit dem zweiten Innenlamellenträger 154 verbunden. Das Motordrehmoment wird somit auf die zweite Getriebeeingangswelle 151 übertragen. Entsprechende Gangräder leiten die Rotationsbewegung drehmomentverändert auf die nicht dargestellte, den Antriebsstrang antreibende Getriebeausgangswelle weiter.

Im zweiten Ausgleichsraum 190 sind eine Vielzahl von Federelementen 200, z.B. in Form von Schraubendruckfedern, angeordnet. Sie stützen sich zwischen dem zweiten Ringkolben 161 und der Begrenzungswandung 191 ab. U.a. über die Federelemente 200 wird der Ringkolben 161 beim Lösen der zweiten Kupplung 150 vom entsprechenden Lamellenpaket 155 abgehoben.

Die einzelnen Bauteile der Doppelwellenkupplung 300 werden zunächst getrennt hergestellt und anschließend montiert. Die Montage erfolgt beispielsweise an einzelnen, getrennten Arbeitsplätzen oder entlang einer Fertigungslinie mit mehreren Stationen und einem automatisierten Werkstücktransport. Hierbei werden beispielsweise, ausgehend von einer Grundbaugruppe, an den verschiedenen Stationen einzelne Bauteile automatisch oder halbautomatisch angebaut und gegebenenfalls gesichert.

Selbst wenn alle Einzelteile innerhalb der zulässigen Toleranzen hergestellt sind, können sich aus der Summe der Herstellungs- und Montagetoleranzen Abweichungen ergeben, die die Betriebseigenschaften des Reibkupplungssystems 300 beeinflussen.

Weicht beispielsweise die Konzentrizität der Außenlamellenträger 40, 140 voneinander ab, werden die Druckkolbendichtungen ungleichmäßig beansprucht. Dies kann ein ungleichmäßiges Verfahren z.B. des Kolbens 61 bewirken und somit eine ungleichmäßige Lamellenanpresskraft verursachen.

Die Lamellen 56, 57; 156, 157 der Lamellenpakete 55, 155 können Unebenheiten aufweisen. Dies kann bei einer Umdrehung der Doppelwellenkupplung 300 zu einer Veränderung der Anpresskraft und damit zu einer Schwankung des mittels der Doppelwellenkupplung 300 übertragbaren Moments führen.

Ein weiterer Einflussfaktor kann eine Unrundheit der Nut für den Anschlagring 59 sein. Hierdurch kann eine ungleichmäßige Anlage des Lamellenpakets 55 verursacht werden.

Diese beispielhaft aufgezählten Abweichungen können einzeln oder in der Summe die Betriebseigenschaften des Reibkupplungssystems 300 beeinflussen. Sie wirken sich z.B. in einer Ungleichförmigkeit des mittels des Reibkupplungssystems 300 z.B. von der Kurbelwelle über die Kupplungseingangswelle 20 auf die jeweilige Getriebeeingangswelle 51; 151 übertragenen Drehmoments aus. Hierbei sind die Amplitude und die Periodenlänge der Schwankung des Drehmoments über eine Umdrehung oder über ein Zeitintervall Maße für die Momentengleichförmigkeit.

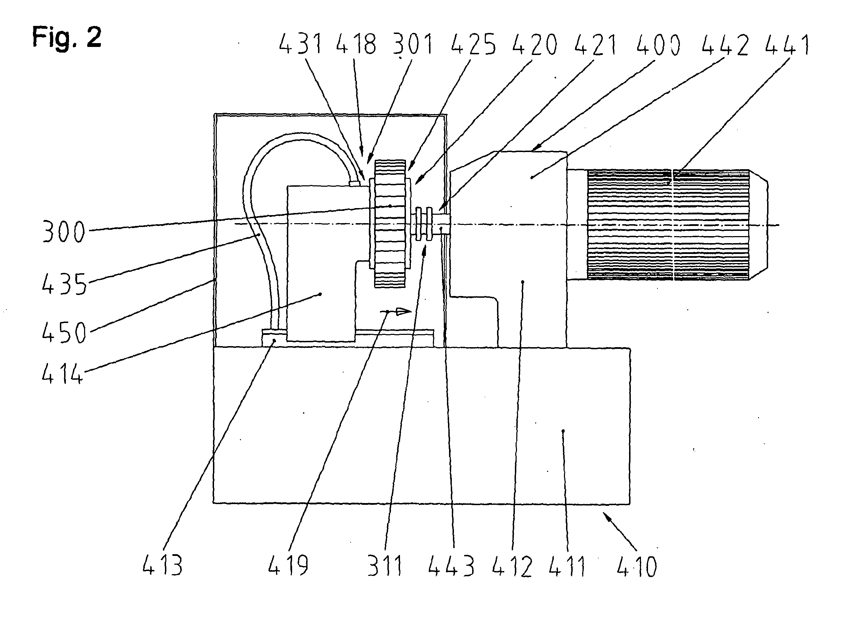

Um die Momentengleichförmigkeit zu messen, wird das montierte Reibkupplungssystem 300 mittels eines Messsystems 400 geprüft und gemessen. Hierzu wird das Reibkupplungssystem 300 in eine Messvorrichtung 420 einer Messmaschine 410 eingesetzt. Eine derartige Messmaschine 410 ist in der Figur 2 dargestellt. Sie umfasst beispielsweise ein Gestell 411 mit einem Maschinenständer 412 sowie einen auf einer Führung 413 verstellbaren Werkstückschlitten 414.

Der Maschinenständer 412 kann fest oder lösbar mit dem Gestell 411 verbunden sein. Auch ein auf dem Gestell 411 verfahrbarer Maschinenständer 412 ist denkbar. Der Maschinenständer 412 trägt in diesem Ausführungsbeispiel einen Antriebsmotor 441 und beispielsweise ein hier nicht weiter dargestelltes Getriebe 442 mit einer festen Übersetzung. Die Ausgangswelle 443 dieses Getriebes 442 trägt eine Aufnahmevorrichtung 421.

Die Führung 413 ist in diesem Ausführungsbeispiel eine Längsführung, beispielsweise in der Bauart einer Flachführung. Die Führungsrichtung 419 ist parallel zur Längskante des Gestells 411 und zur Welle des Antriebsmotors 441 orientiert.

Der Werkstücksschlitten 414 ist manuell oder mittels eines Antriebs entlang der Führung 413 verfahrbar. Seine Position auf der Führung 413 kann beispielweise mittels einer Klemmvorrichtung gesichert werden. Der Werkstückschlitten 414 trägt eine zweite Aufnahmevorrichtung 431, die hier mit der erstgenannten Aufnahmevorrichtung 421 fluchtet. Die Aufnahmevorrichtung 431 ist in diesem Ausführungsbeispiel mittels mehrerer Hydraulikleitungen 435, von denen in der Figur 2 nur eine dargestellt ist, mit dem Gestell 411 verbunden. Außerdem ist am Werkstückschlitten 414, der hier einen starren Längsanschlag 418 bildet, z.B. eine in der Figur 2 nicht dargestgllte Momentenmessvorrichtung angeordnet. Letztere umfasst beispielsweise eine Kraftmessdose. Zur Übertragung des Moments der Kupplungssystems 300 ist die Aufnahmevorrichtung 431 beispielsweise über eine Drehdurchführung mit einem Hebel verbunden, der auf die Kraftmessdose wirkt.

In der Darstellung der Figur 2 ist in die so gebildete Messvorrichtung 420 ein Kupplungssystem 300 eingesetzt. Hierbei sitzt beispielsweise der Kupplungseingangswelle 20, die hier einen antriebsseitigen Adapter 301 des Kupplungssystems 300 bildet, in der schlittenseitigen Aufnahmevorrichtung 431. Die hydraulischen Anschlüsse des Kupplungssystems 300 sind beispielsweise hydraulisch mit den Leitungen 435 verbunden.

Der Getriebeeingangswellen 51; 151, die abtriebsseitigen Adapter 311 des Kupplungssystems 300, sitzen in der ständerseitigen Aufnahmevorrichtung 421. Selbstverständlich kann das Kupplungssystem 300 auch derart in die Messvorrichtung 420 eingesetzt sein, dass die Getriebeeingangswellen 51; 151 in der schlittenseitigen Aufnahmevorrichtung 431 sitzt und der Kupplungseingangswellen 20 in der ständerseitigen Aufnahmevorrichtung 421 angeordnet ist.

Um das Kupplungssystem 300 in die Messvorrichtung 420 einzusetzen, wird beispielsweise der Werkstückschlitten 414 in der Darstellung der Figur 2 nach links verfahren. Das Kupplungssystem 300 wird nun von Hand, mittels einer Handhabungsvorrichtung, etc. so in die Messvorrichtung 420 eingesetzt, dass z.B. die Kupplungsachse 5 mit den Achsen der Aufnahmevorrichtungen 421, 431 fluchtet. Anschließend wird der Werkstückschlitten 414 in der Darstellung der Figur 2 nach rechts verfahren und beispielsweise durch Anlegen der Klemmvorrichtung gesichert. Hierbei werden z.B. die hydraulischen Verbindungen zwischen dem Kupplungssystem 300 und dem Aufnahmeadapter 431 geschlossen.

Anschließend wird der Spritzschutz 450 geschlossen.

Um die Momentengleichförmigkeit zu messen, wird beispielsweise zunächst ein Schmierölstrom mit z.B. 3 Liter pro Minute eingeschaltet. Hierbei werden die Reibflächen 56, 57; 156, 157 des Kupplungssystems 300 benetzt. Anschließend wird das Kupplungssystem 300 beispielsweise mittels der Hydraulik der Messvorrichtung 420 geschlossen. Diese Funktion kann auch pneumatisch erfolgen. Hierbei werden z.B. zunächst die Reibflächen 55, 56 der ersten Reibkupplung 50 des Kupplungssystems 300 mittels einer Vorspannvorrichtung, die zumindest während der Messung eine konstante Kraft erzeugt, aneinandergepresst. Diese Kraft ist beispielsweise derart eingestellt, dass zwischen den Reibflächen 55, 56 der Reibkupplung 50 das übertragbare Moment zwischen 10 und 100 Newtonmeter beträgt. Beispielsweise beträgt es für die Messung 30 Newtonmeter. Das übertragbare Moment berechnet sich aus dem Produkt der Anpresskraft, der Anzahl der Reibflächen, dem mittleren Reibradius und des Reibbeiwerts.

Der Antriebsmotor 441 wird nun eingeschaltet, so dass z.B. die Ausgangswelle 443 des Getriebes 442 des Antriebsmotor 441 - und damit die erste Aufnahmevorrichtung 421 - eine Drehzahl von 1 bis 1000 Umdrehungen pro Minute hat. Während der Messung ist die Drehzahl konstant.

Das an der Reibkupplung 50 anliegende Moment kann mittels Kraftmessdose, Messflansch oder Messwelle ermittelt werden.

Die Messung mittels des beschriebenen Messsystems 400 wird in diesem Ausführungsbeispiel während eines Zeit-intervalls von 90 Sekunden durchgeführt. Hierbei wird der Kraftverlauf - und wegen des Hebelarms konstanter Länge auch der Momentenverlauf - über der Zeit rechnergestützt erfasst. Die Messung ergibt einen nichtkonstanten Momentenverlauf mit Maxima und Minima. Dieser kann periodisch sein.

Beispielsweise mittels einer Fourieranalyse kann aus dem Momentenverlauf die Wiederholfrequenz der Maxima und der Minima ermittelt werden. Hierbei sind z.B. die Maxima erster Ordnung die Maxima mit der höchsten Amplitude, die Maxima höherer Ordnung z.B. Maxima geringerer Amplitude. Diese Fourieranalyse erfolgt beispielsweise rechnergestützt während des Messintervalls. Anstatt einer vollständigen Fourieranalyse kann, z.B. zur Verringerung der zu verarbeitenden Datenmenge, eine sogenannte Fast-Fourier-Transformation durchgeführt werden.

Die Amplitude der Drehmomentsignale über der Frequenz - das Ergebnis der Fourieranalyse - ist beispielsweise ein Klassifizierungsmerkmal der gemessenen Reibkupplung 50. Je niedriger diese Amplituden sind, desto gleichförmiger ist der Momentenverlauf. Eine Reibkupplung 50 mit niedrigen Amplituden wird z.B. als sehr gute Kupplung 50 klassifiziert, eine Kupplung 50 mit hohen Amplituden wird beispielsweise als schlechte Kupplung 50 klassifiziert.

Der Werkstückschlitten 414 kann auch einen Bremsmotor umfassen, der z.B. eine Ausgangsdrehzahl von 0,01 1/min bis 1 1/min aufweist. Bei der Messung der Momentengleichförmigkeit wird dann beispielsweise das Differenzmoment des Antriebs- und des Abtriebsmoments ermittelt. Diese Messung kann antriebs- oder abtriebsseitig erfolgen.

Mit diesem Verfahren kann auch die Momentengleichförmigkeit der zweiten Reibkupplung 150 der Doppelwellenkupplung 300 ermittelt werden.

Im Anschluss an diese Messungen werden beispielsweise die hydraulischen Versorgungsleitungen abgesperrt und das restliche Öl wird mit hoher Drehzahl ausgeschleudert.

Die Entnahme des gemessenen Kupplungssystems 300 aus der Messvorrichtung 420 erfolgt in umgekehrter Reihenfolge wie das Einsetzen. Je nach seiner Klassifizierung kann das Kupplungssystem 300 dem weiteren Materialfluss zugeführt werden.

Die Messvorrichtung 420 kann vorteilhaft in eine automatisierte Fertigungslinie eingebunden sein. Das an einzelnen Stationen einer solchen Fertigungslinie vollständig montierte Kupplungssystem 300 wird mittels einer Werkstückzuführvorrichtung 600 in einen Prüfbereich 650 für die Momentengleichförmigkeit gefördert.

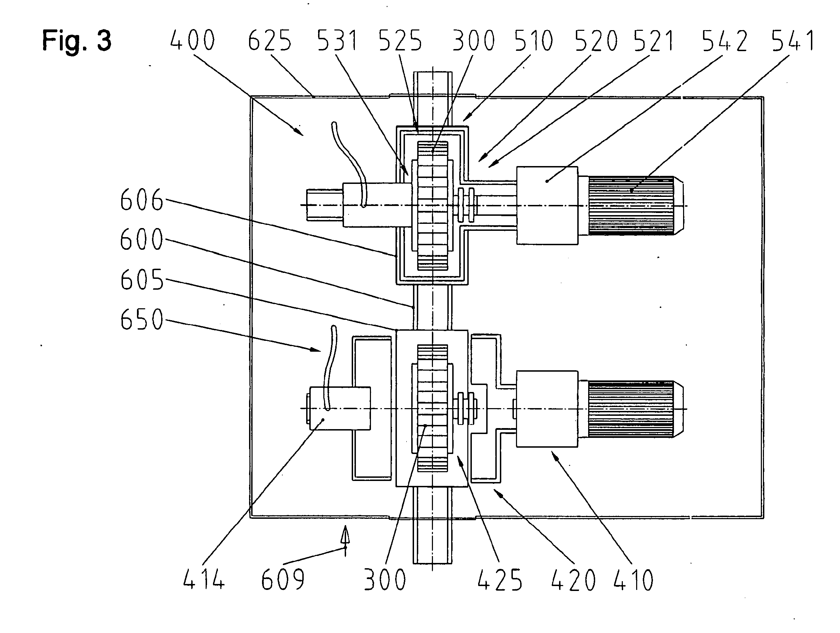

Die Figur 3 zeigt eine Draufsicht eines Prüfbereichs 650 mit einem Messsystem 400, dass zwei Messmaschinen 410, 510 mit jeweils einer Messvorrichtung 420, 520 umfasst. Die Hauptkomponenten der Messmaschinen 410, 510 und der Messvorrichtungen 420, 520 sind zumindest ähnlich aufgebaut wie die Komponenten der in der Figur 2 dargestellten Messmaschine 410 und der Messvorrichtung 420.

Die Werkstückzuführvorrichtung 600 fördert in der Darstellung der Figur 3 die Kupplungssysteme 300 auf Werkstückträgern 605, 606 von unten nach oben. Um die Werkstückträger 605, 606 in den Prüfbereich 650 zu fördern, wird zunächst der Spritzschutz 625 geöffnet. Die Werkstückschlitten 414 der Messmaschinen 410, 510 stehen in einer hinteren Ruheposition. Der in der Förderrichtung 609 vorne liegende Werkstückträger 605 mit einem Kupplungssystem 300 wird in den Arbeitsraum 525 der in der Förderrichtung 609 hinten liegenden Messvorrichtung 520 gefördert. Der in der Förderrichtung 609 hinten liegende Werkstückträger 606 wird in den Arbeitsraum 425 der Messvorrichtung 420 gefördert.

Sobald die Werkstückträger 605, 606 diese Positionen erreicht haben, werden beispielsweise die Werkstückträger 605, 606 mittels jeweils einer hier nicht dargestellten Hubvorrichtung angehoben. Die Lage des angehobenen Kupplungssystems 300 im Arbeitsraum 425 ist beispielsweise in der unteren Messvorrichtung 420 der Figur 3 dargestellt. Sobald die Kupplungsachse 5 mit den Mittelachsen der Aufnahmevorrichtungen 421, 431 zusammenfällt, verfährt der Werkstückschlitten 414 in Richtung des Maschinenständers 412. Das Kupplungssystem 300 wird von den beiden Aufnahmevorrichtungen 421, 431 aufgenommen. Hiernach kann der Werkstückträger 605, der gegebenenfalls auch in Querrichtung zur Förderrichtung 609 verfahrbar ist, abgesenkt werden. Ein in die Messvorrichtung 520 eingesetztes Kupplungssystem 300 ist beispielsweise in der oberen Messvorrichtung 520 der Figur 3 dargestellt. Beim Einsetzen des Kupplungssystems 300 werden z.B. auch die hydraulischen Verbindungen geschlossen.

Die Messvorrichtungen 420, 520 können auch Bremsmotoren umfassen.

Die Messung und die Auswertung der Momentengleichförmigkeit erfolgt z.B., wie im Zusammenhang mit der Figur 2 beschrieben. Auch das Schleppmoment kann mit diesem automatisierten Messsystem 400 wie beschrieben ermittelt werden.

Die beiden hier beschriebenen Messvorrichtungen 420, 520 können an dieselbe Auswertevorrichtung angeschlossen sein. Diese wiederum ist beispielsweise mit einem Fertigungsleitrechner datentechnisch verbunden.

Die Entnahme der Kupplungssysteme 300 aus den Messvorrichtungen 420, 520 erfolgt in umgekehrter Reihenfolge wie deren Aufnahme. Sobald die Kupplungssysteme 300 auf den Werkstückträgern 505, 506 aufliegen, werden letztere nach dem Öffnen des Spritzschutzes 625 in der Förderrichtung 609 aus dem Prüfbereich 650 herausgefördert.

Anstatt der hier beschriebenen Doppelwellenkupplung 300 kann auch eine einfache Kupplung gemessen und geprüft werden.

Bei einem Serienfertigungsprozess kann durch das erfindungsgemäße Verfahren und das Messsystem für sämtliche in der Serienfertigung gefertigten Kupplungen die Momentengleichförmigkeit gemessen werden. Die gemessene Momentengleichförmigkeit wird dann mit einem Momentengleichförmigkeitsgrenzwert verglichen und im Fall einer Überschreitung des Grenzwerts werden die Kupplungen entsprechend überarbeitet, danach erneut gemessen oder aber aus dem Serienfertigungsprozess entfernt. Als besonderer Vorteil wird durch dieses Verfahren sichergestellt, dass sämtliche Kupplungen, welche die Serienfertigung verlassen, vorgegebene Spezifikationen im Hinblick auf die Momentengleichförmigkeit sicher einhalten (100% Kontrolle).

### Bezugszeichenliste

- 1: Trockenraum; Getriebebereich, trocken
- 2: Getriebenassraum
- 3: Zweimassenschwungrad, Schwungrad
- 5: Rotationsachse des Kupplungssystems

- 10: Getriebegehäuse, Gehäuseglocke
- 11: Trennwand

- 20: Kupplungseingangswelle
- 21: Wellen-Naben-Verbindung
- 22: Mitnehmerscheibensitz
- 24: Bohrung, zentral

- 30: Mitnehmerscheibe
- 39: Abstand zwischen (55) und (41)

- 40: erster Außenlamellenträger, Kupplungsbauteil
- 41: Innenwandung von (40)
- 42: Außenwandung von (40)
- 43: Sicke, Sickenerhebung
- 44: Mittellinie
- 45: Ringzylinder
- 46: Innenraum
- 47: Hauptnabe
- 48: Zylinderaußenwand
- 49: Ausnehmungen für (70)

- 50: erste Reibkupplung, Kupplung
- 51: erste Getriebeeingangswelle
- 52: Wellen-Naben-Verbindung
- 53: erster Lamellenträgerflansch
- 54: erster Innenlamellenträger
- 55: Lamellenpaket
- 56: Außenlamellen, Kupplungsteile
- 57: Innenlamellen, Kupplungsteile
- 58: Lamellentragabschnitt, außen
- 59: Anschlag, Anschlagring

- 60: erstes Stellglied
- 61: erster Ringkolben, Kolben, Druckkolben
- 62: Kolbenabschnitt
- 67: Kraftübertragungsabschnitt

- 70: Zungen
- 71: Zungenstirnfläche
- 73: Zungenlänge
- 74: Mittellinie
- 75: Lücke
- 76: Lückengrund
- 79: Kreis, auf dem (44) und (74) liegen

- 80: erster Arbeitsraum
- 90: erster Ausgleichsraum
- 99: Rückraum

- 100: Membranfeder, Tellerfeder, Rückstellelement

- 130: Ausnehmungsverstärkung, Clip
- 131: Rohrabschnitt
- 132: Flanschringabschnitt
- 133: Rasthaken

- 140: Ummantelung, Hülse
- 144: Bohrung
- 145: Anfasung
- 146: Innenkantenausrundungen

- 150: zweite Reibkupplung, Kupplung
- 151: zweite Getriebeeingangswelle
- 152: Wellen-Naben-Verbindung
- 153: zweiter Lamellenträgerflansch
- 154: zweiter Innenlamellenträger
- 155: Lamellenpaket
- 156: Außenlamellen, Kupplungsteile
- 157: Innenlamellen, Kupplungsteile
- 158: Lamellentragabschnitt, innen

- 160: zweites Stellglied
- 161: zweiter Ringkolben, Kolben, Ausgleichskolben
- 162: Kolbenabschnitt

- 167: Betätigungsabschnitt

- 180: zweiter Arbeitsraum
- 181: Zylinderring

- 190: Ausgleichsraum
- 191: Ausgleichsraumbegrenzungswandung

- 200: Federelemente, Rückholfedern, Schraubenfedern

- 300: Reibkupplungssystem, Doppelwellenkupplung
- 301: antriebsseitiger Adapter

- 311: abtriebsseitige Adapter

- 400: Messsystem
- 410: Messmaschine
- 411: Gestell
- 412: Maschinenständer
- 413: Führung
- 414: Werkstückschlitten

- 418: Längsanschlag
- 419: Führungsrichtung
- 420: Messvorrichtung
- 421: Aufnahmevorrichtung

- 425: Arbeitsraum

- 431: Aufnahmevorrichtung

- 435: Hydraulikleitungen

- 441: Antriebsmotor
- 442: Getriebe
- 443: Ausgangswelle von (442)

- 450: Spritzschutz

- 510: Messmaschine

- 520: Messvorrichtung
- 521: Aufnahmevorrichtung

- 525: Arbeitsraum

- 531: Aufnahmevorrichtung

- 541: Antriebsmotor
- 542: Getriebe

- 600: Werkstückzuführvorrichtung

- 605: Werkstückträger
- 606: Werkstückträger

- 609: Förderrichtung

- 625: Spritzschutz

- 650: Prüfbereich

## Patentansprüche

1. verfahren zur Messung der Momentengleichförmigkeit von schaltbaren Reibkupplungssystemen (300), wobei das einzelne Reibkupplungssystem (300) einen antriebsseitigen Adapter (301) und mindestens einen abtriebsseitigen Adapter (311) aufweist,
- das Reibkupplungssystem (300) in eine Messvorrichtung (420; 520) eingesetzt wird, wobei die Messvorrichtung (420; 520) mittels einer ersten Aufnahmevorrichtung (421; 521; 431; 531) den antriebsseitigen Adapter (301) aufnimmt und mittels einer weiteren Aufnahmevorrichtung (431; 531; 421; 521) den abtriebsseitigen Adapter (311) umgreift,
- eine der Aufnahmevorrichtungen (421, 431; 521, 531) mit einem Antriebsmotor (441; 541) verbunden ist,
- die Messvorrichtung (420; 520) mindestens eine Momentenmessvorrichtung umfasst,
- eine Antriebskraft des Antriebsmotors (441; 541) reibschlüssig überragende Kupplungslamellen (56, 57; 156, 157) mittels einer Vorspannvorrichtung, die eine Prüfkraft erzeugt, aneinander gepresst werden,
- der Antriebsmotor (441; 541) mit einer Prüfdrehzahl angetrieben wird und
- innerhalb eines Zeitintervalls das mittels des Reibkupplungssystems (300) übertragene Drehmoment des Antriebsmotors (441; 541) mittels der Momentenmessvorrichtung gemessen wird,
**dadurch gekennzeichnet, dass**
die Wiederholfrequenz von Drehmomentschwankungen über das Zeitintervall in Abhängigkeit der Drehzahl des Antriebsmotors (441; 541) ermittelt wird.

2. Verfahren nach Anspruch 1,
**dadurch gekennzeichnet, dass** die Ermittlung der Wiederholfrequenz rechnergestützt mittels einer Fourieranalyse erfolgt.

3. Verfahren nach Anspruch 2,
**dadurch gekennzeichnet, dass** die Ermittlung der Wiederholfrequenz während des Zeitintervalls erfolgt.

4. Verfahren nach Anspruch 2,
**dadurch gekennzeichnet, dass** die gemessenen Kupplungssysteme (300) je nach der ermittelten Amplitude der ermittelten Frequenzwerte klassifiziert werden.

5. Verfahren nach Anspruch 1,
**dadurch gekennzeichnet, dass** die Messvorrichtung (420; 520) einen Bremsmotor umfasst, der an der dem Antriebsmotor (441; 541) abgewandten Aufnahmevorrichtung (431; 531; 421; 521) angeordnet ist.

6. Verfahren nach Anspruch 1,
**dadurch gekennzeichnet, dass** das Reibkupplungssystem (300) eine Doppelwellenkupplung (300) ist.

7. Verfahren nach Anspruch 1 oder 6,
**dadurch gekennzeichnet, dass** der antriebsseitige Adapter (301) des Reibkupplungssystems (300) eine Kupplungseingangswelle (20) umfasst und dass jeder abtriebsseitige Adapter (311) des Reibkupplungssystems (300) eine Getriebeeingangswelle (51; 151) umfasst.

8. Verfahren nach den Ansprüchen 6 und 7,
**dadurch gekennzeichnet, dass** das Doppelkupplungssystem (300) zwei Getriebeeingangswellen (51, 151) umfasst.

9. Verfahren nach Anspruch 8,
**dadurch gekennzeichnet, dass** das Doppelkupplungssystem (300) zwei Paare von Kupplungslamellen (56, 57; 156, 157) umfasst, die alternativ die Antriebskraft übertragen.

10. Verfahren nach Anspruch 9,
**dadurch gekennzeichnet, dass** für jedes Paar von Kupplungslamellen (56, 57; 156, 157) ein Messwert ermittelt wird.

11. Verfahren nach Anspruch 1,
**dadurch gekennzeichnet, dass** das Reibkupplungssystem (300) mittels einer Werkstückzuführvorrichtung (600) an die Messvorrichtung (420; 520) gefördert wird.

12. Verfahren nach Anspruch 11,
**dadurch gekennzeichnet, dass** das Reibkupplungssystem (300) mittels einer Hubvorrichtung in die Messvorrichtung (420; 520) gehoben wird.

13. Verfahren nach Anspruch 12,
**dadurch gekennzeichnet, dass** die einzelne Messvorrichtung (420; 520) in einem Prüfbereich (650) angeordnet ist, in dem zwei Messvorrichtungen (420; 520) in der Förderrichtung (609) der Werkstückzuführvorrichtung (600) hintereinander angeordnet sind.

14. Verfahren nach Anspruch 1,
**dadurch gekennzeichnet, dass** die Prüfkraft zwischen den Kupplungslamellen (56, 57; 156, 157) ein Moment zwischen 10 und 100 Newtonmeter erzeugt.

15. Verfahren nach Anspruch 1, 5 oder 14,
**dadurch gekennzeichnet, dass** die Drehzahl der Ausgangswelle des Getriebes (442, 542) des Antriebsmotors (441, 541) zwischen 1 1/min und 1000 1/min beträgt.

16. Verfahren nach Anspruch 5 oder 15,
**dadurch gekennzeichnet, dass** die Drehzahl des Bremsmotors zwischen 0,1 1/min und 1 1/min beträgt.

17. Messsystem (400) zur Messung der Momentengleichförmigkeit von schaltbaren Reibkupplungssystemen (300), wobei
- das Messsystem (400) mindestens eine Messvorrichtung (420; 520) umfasst,
- die einzelne Messvorrichtung (420; 520) mindestens zwei Aufnahmevorrichtungen (421, 431; 521, 531) umfasst,
- eine der Aufnahmevorrichtungen (421; 521; 431; 531) der jeweiligen Messvorrichtung (420; 520) mit einem Antriebsmotor (441; 541) verbunden ist,
- die einzelne Messvorrichtung (420; 520) eine Momentenmessvorrichtung umfasst,
- die einzelne Messvorrichtung (420; 520) eine Vorspannvorrichtung zur gegensinnigen Belastung der beiden Aufnahmevorrichtungen (421, 431; 521, 531) umfasst und
- das Messsystem (400) mindestens eine Auswertevorrichtung umfasst,
**dadurch gekennzeichnet, dass** die Auswertevorrichtung die Wiederholfrequenz von Drehmomentschwankungen über das Zeitintervall in Abhängigkeit der Drehzahl des Antriebsmotors (441; 541) ermittelt.

18. Messsystem (400) nach Anspruch 17,
**dadurch gekenzeichnet,** dass mindestens eine Messvorrichtung (420, 520) einen Bremsmotor oder einen Festanschlag umfasst.

19. Messsystem (400) nach Anspruch 17,
**dadurch gekenzeichnet**, dass die Vorspannvorrichtungen der Messvorrichtungen (420, 520) hydraulisch betätigt ist.

20. Messsystem (400) nach Anspruch 17,
**dadurch gekenzeichnet**, dass eine Aufnahmevorrichtung (421, 521; 431, 531) mindestens zwei relativ zueinander rotierbare Getriebeeingangeswellen (51, 151) eines Reibkupplungssystems (300) aufnehmen kann.

21. Messsystem (400) nach Anspruch 17 oder Anspruch 20,
**dadurch gekenzeichnet**, dass das Messsystem (400) zwei Messvorrichtungen (420, 520) umfasst.

22. Messsystem (400) nach Anspruch 17,
**dadurch gekenzeichnet**, dass die Werkstückbeschickung mittels einer automatisierten Werkstückzuführung (600) erfolgt.

23. Verwendung des Verfahrens nach einem der Ansprüche 1 bis 16 zur Messung der Momentengleichförmigkeit einer nasslaufenden Kupplung, einer Anfahrkupplung oder einer Doppelwellenkupplung (300).

24. Verwendung des Verfahrens nach einem der Ansprüche 1 bis 16 zur Prüfung der Momentengleichförmigkeit von in einem Serienfertigungsprozess gefertigten Reibkupplungssystemen (300).

25. Verwendung nach Anspruch 24,
**dadurch gekenzeichnet**, dass bei der Prüfung die bei dem gefertigten Reibkupplungssystem (300) gemessene Momentengleichförmigkeit mit einem Momentengleichförmigkeitsgrenzwert verglichen wird.

26. Serienfertigungsanlage für Reibkupplüngssysteme (300) aufweisend mindestens ein Messsystem (400) nach einem der Ansprüche 17 bis 22.

27. Serienfertigungsanlage nach Anspruch 26,
**dadurch gekenzeichnet**, dass wenigstens eine Auswertevorrichtung vorgesehen ist, mittels welcher von dem mindestens einen Messsystem (400) ermittelte Momentengleichförmigkeiten mit einem vorgegebenen Momentengleichförmigkeitswert vergleichbar sind.

## Claims

1. Method for measuring the torque uniformity of shiftable friction clutch systems (300), with the individual friction clutch system (300) having a drive-input-side adapter (301) and at least one drive-output-side adapter (311), with
- the friction clutch system (300) being inserted into a measuring device (420; 520), with the measuring device (420; 520) holding the drive-input-side adaptor (301) by means of a first holding device (421; 521; 431; 531) and engaging around the drive-output-side adapter (311) by means of a further holding device (431; 531; 421; 521),
- one of the holding devices (421, 431; 521, 531) being connected to a drive motor (441; 541),
- the measuring device (420; 520) comprising at least one torque measuring device,
- clutch plates (56, 57; 156, 157), which transmit a drive force of the drive motor (441; 541) in a frictionally engaging manner, being pressed against one another by means of a preload device which generates a test force,
- the drive motor (441; 541) being driven at a test rotational speed and,
- within a time interval, the torque of the drive motor (441; 541) which is transmitted by means of the friction clutch system (300) being measured by means of the torque measuring device,
**characterized in that**
the repetition frequency of torque fluctuations over the time interval is determined as a function of the rotational speed of the drive motor (441; 541) .

2. Method according to Claim 1,
**characterized in that** the determination of the repetition frequency takes place in a computer-aided manner by means of a Fourier analysis.

3. Method according to Claim 2,
**characterized in that** the determination of the repetition frequency takes place during the time interval.

4. Method according to Claim 2,
**characterized in that** the measured clutch systems (300) are classified according to the determined amplitude of the determined frequency values.

5. Method according to Claim 1,
**characterized in that** the measuring device (420; 520) comprises a brake motor which is arranged on the holding device (431; 531; 421; 521) which faces away from the drive motor (441; 541).

6. Method according to Claim 1,
**characterized in that** the friction clutch system (300) is a dual-shaft clutch (300).

7. Method according to Claim 1 or 6,
**characterized in that** the drive-input-side adapter (301) of the friction clutch system (300) comprises a clutch input shaft (20) and **in that** each drive-output-side adapter (311) of the friction clutch system (300) comprises a transmission input shaft (51; 151).

8. Method according to Claims 6 and 7,
**characterized in that** the dual-clutch system (300) comprises two transmission input shafts (51, 151).

9. Method according to Claim 8,
**characterized in that** the dual-clutch system (300) comprises two pairs of clutch plates (56, 57; 156, 157) which transmit the drive force alternately.

10. Method according to Claim 9,
**characterized in that** a measurement value is determined for each pair of clutch plates (56, 57; 156, 157).

11. Method according to Claim 1,
**characterized in that** the friction clutch system (300) is conveyed to the measuring device (420; 520) by means of a workpiece supply device (600).

12. Method according to Claim 11,
**characterized in that** the friction clutch system (300) is raised into the measuring device (420; 520) by means of a lifting device.

13. Method according to Claim 12,
**characterized in that** the individual measuring device (420; 520) is arranged in a test region (650) in which two measuring devices (420; 520) are arranged in series in the conveying direction (609) of the workpiece supply device (600).

14. Method according to Claim 1,
**characterized in that** the test force between the clutch plates (56, 57; 156, 157) generates a torque of between 10 and 100 Newton meters.

15. Method according to Claim 1, 5 or 14,
**characterized in that** the rotational speed of the output shaft of the transmission (442, 542) of the drive motor (441, 541) is between 1 rev/min and 1000 rev/min.

16. Method according to Claim 5 or 15,
**characterized in that** the rotational speed of the brake motor is between 0.1 rev/min and 1 rev/min.

17. Measuring system (400) for measuring the torque uniformity of shiftable friction clutch systems (300), with
- the measuring system (400) comprising at least one measuring device (420; 520),
- the individual measuring device (420; 520) comprising at least two holding devices (421, 431; 521, 531),
- one of the holding devices (421; 521; 431; 531) of the respective measuring device (420; 520) being connected to a drive motor (441; 541),
- the individual measuring device (420; 520) comprising a torque measuring device,
- the individual measuring device (420; 520) comprising a preload device for the opposite loading of the two holding devices (421, 431; 521, 531), and
- the measuring system (400) comprising at least one evaluating device,
**characterized in that** the evaluating device determines the repetition frequency of torque fluctuations over the time interval as a function of the rotational speed of the drive motor (441; 541).

18. Measuring system (400) according to Claim 17,
**characterized in that** at least one measuring device (420; 520) comprises a brake motor or a fixed stop.

19. Measuring system (400) according to Claim 17,
**characterized in that** the preload devices of the measuring devices (420, 520) are hydraulically actuated.

20. Measuring system (400) according to Claim 17,
**characterized in that** one holding device (421, 521; 431; 531) can hold at least two transmission input shafts (51, 151), which are rotatable relative to one another, of a friction clutch system (300).

21. Measuring system (400) according to Claim 17 or Claim 20,
**characterized in that** the measuring system (400) comprises two measuring devices (420, 520).

22. Measuring system (400) according to Claim 17,
**characterized in that** the workpiece fitting takes place by means of an automated workpiece supply (600).

23. Use of the method according to one of Claims 1 to 16 for measuring the torque uniformity of a wet-running clutch, a starting clutch or a dual-shaft clutch (300).

24. The use of the method according to one of Claims 1 to 16 for testing the torque uniformity of friction clutch systems (300) produced in a series-production process.

25. Use according to Claim 24,
**characterized in that**, during the test, the torque uniformity measured with the produced friction clutch system (300) is compared with a torque uniformity limit value.

26. Series production plant for friction clutch systems (300) having at least one measuring system (400) according to one of Claims 17 to 22.

27. Series production plant according to Claim 26,
**characterized in that** at least one evaluating device is provided, by means of which torque uniformities determined by the at least one measuring system (400) can be compared with a predefined torque uniformity value.

## Revendications

1. Procédé de mesure des couples de systèmes d'embrayage à friction (300) à changement de vitesse, le système d'embrayage à friction (300) individuel comportant un adaptateur (301) côté entraînement d'entrée et au moins un adaptateur (311) côté entraînement de sortie ;
le système d'embrayage à friction (300) pouvant être utilisé dans un dispositif de mesure (420 ; 520), le dispositif de mesure (420 ; 520) logeant l'adaptateur (301) côté entraînement d'entrée à l'aide d'un premier dispositif de logement (421 ; 521 ; 431 ; 531) et engrenant l'adaptateur (311) côté entraînement de sortie à l'aide d'un autre dispositif de logement (431 ; 531 ; 421 ; 521) ;
un des dispositifs de logement (421, 431 ; 521, 531) est relié à un moteur d'entraînement (441 ; 541) ;
le dispositif de mesure (420 ; 520) comprend au moins un dispositif de mesure de couple ;
des lamelles d'embrayage (56, 57 ; 156, 157) transmettant une force d'entraînement du moteur d'entraînement (441 ; 541) par complémentarité de frottements étant comprimées les unes contre les autres à l'aide d'un dispositif de précontrainte produisant une force d'essai ;
le moteur d'entraînement (441 ; 541) est entraîné à un régime d'essai ; et
le couple du moteur d'entraînement (441 ; 541) transmis par le système d'embrayage à friction (300) est mesuré à l'aide du dispositif de mesure de couple pendant un intervalle de temps ;
**caractérisé en ce que** la fréquence de répétition des oscillations de couple est calculée pour l'intervalle de temps en fonction du régime du moteur d'entraînement (441 ; 541) .

2. Procédé selon la revendication 1, **caractérisé en ce que** le calcul de la fréquence de répétition réalisé est assisté par calculs à l'aide d'une analyse de Fourier.

3. Procédé selon la revendication 2, **caractérisé en ce que** le calcul de la fréquence de répétition est réalisé pendant l'intervalle de temps défini.

4. Procédé selon la revendication 2, **caractérisé en ce que** les systèmes d'embrayage (300) mesurés sont respectivement classés en fonction de l'amplitude calculée des valeurs de fréquence déterminées.

5. Procédé selon la revendication 1, **caractérisé en ce que** le dispositif de mesure (420 ; 520) comprend un moteur de frein disposé au niveau du dispositif de logement (431 ; 531 ; 421 ; 521) situé à l'opposé du moteur d'entraînement (441 ; 541).

6. Procédé selon la revendication 1, **caractérisé en ce que** le système d'embrayage à friction (300) est un embrayage à arbre double (300).

7. Procédé selon la revendication 1 ou 6, **caractérisé en ce que** l'adaptateur (301) situé côté entraînement d'entrée du système d'embrayage à friction (300) comprend un arbre d'embrayage (20) et que chaque adaptateur (311) situé côté entraînement de sortie du système d'embrayage à friction (300) comprend un arbre d'entrée de boîte de vitesses (51 ; 151).

8. Procédé selon les revendications 6 et 7, **caractérisé en ce que** le système à double embrayage (300) comporte deux arbres d'entrée de boîte de vitesses (51, 151).

9. Procédé selon la revendication 8, **caractérisé en ce que** le système à double embrayage (300) comprend deux paires de lamelles d'embrayage (56, 57 ; 156, 157) transmettant l'une après l'autre la force d'entraînement.

10. Procédé selon la revendication 9, **caractérisé en ce qu'**une valeur de mesure est déterminée pour chaque paire de lamelles d'embrayage (56, 57 ; 156, 157).

11. Procédé selon la revendication 1, **caractérisé en ce que** le système d'embrayage à friction (300) est amené jusqu'au dispositif de mesure (420 ; 520) au moyen d'un dispositif d'amenée de pièces usinées (600).

12. Procédé selon la revendication 11, **caractérisé en ce que** le système d'embrayage à friction (300) est soulevé à l'aide d'un dispositif de levage prévu dans le dispositif de mesure (420 ; 520).

13. Procédé selon la revendication 12, **caractérisé en ce que** chaque dispositif de mesure (420 ; 520) individuel est disposé l'un après l'autre dans une zone d'essai (650) dans laquelle deux dispositifs de mesure (420 ; 520) sont disposés dans la direction de convoyage (609) du dispositif d'amenée de pièces usinées (600).

14. Procédé selon la revendication 1, **caractérisé en ce que** la force d'essai exercée entre les lamelles d'embrayage (56, 57 ; 156, 157) produit un couple compris entre 10 et 100 newtons-mètres.

15. Procédé selon la revendication 1, 5 ou 14, **caractérisé en ce que** le régime de l'arbre de sortie de la boîte de vitesses (442, 542) du moteur d'entraînement (441, 541) est compris entre 1 tr/min et 1000 tr/min.

16. Procédé selon la revendication 5 ou 15, **caractérisé en ce que** le régime du moteur de frein est compris entre 0,1 tr/min et 1 tr/min.

17. Système de mesure (400) pour mesurer les couples de systèmes d'embrayage à friction (300) à changement de vitesse, le système de mesure (400) comprenant au moins un dispositif de mesure (420 ; 520) ;
chaque dispositif de mesure (420 ; 520) individuel comprenant au moins deux dispositifs de logement (421, 431 ; 521, 531) ;
un des dispositifs de logement (421 ; 521 ; 431 ; 531) de chaque dispositif de mesure (420 ; 520) respectif étant relié à un moteur d'entraînement (441 ; 541) ; chaque dispositif de mesure (420 ; 520) individuel comprenant un dispositif de mesure de couple ;
le dispositif de mesure (420 ; 520) individuel comprenant un dispositif de précontrainte permettant de charger dans des sens contraires les deux dispositifs de logement (421, 431 ; 521, 531) ;
et le système de mesure (400) comprenant au moins un dispositif d'analyse ;
**caractérisé en ce que** le dispositif d'analyse détermine la fréquence de répétition des oscillations de couple pour l'intervalle de temps défini en fonction du régime du moteur d'entraînement (441 ; 541).

18. Système de mesure (400) selon la revendication 17, **caractérisé en ce qu'**au moins un dispositif de mesure (420, 520) comprend un moteur de frein ou une butée fixe.

19. Système de mesure (400) selon la revendication 17, **caractérisé en ce que** les dispositifs de précontrainte des dispositifs de mesure (420, 520) sont actionnés de façon hydraulique.

20. Système de mesure (400) selon la revendication 17, **caractérisé en ce qu'**un dispositif de logement (421, 521 ; 431, 531) peut loger au moins deux arbres de sortie de boîte de vitesses (51, 151) pivotant l'un par rapport à l'autre d'un système d'embrayage à friction (300).

21. Système de mesure (400) selon la revendication 17 ou la revendication 20, **caractérisé en ce que** le système de mesure (400) comprend deux dispositifs de mesure (420, 520).

22. Système de mesure (400) selon la revendication 17, **caractérisé en ce que** l'approvisionnement en pièces usinées se fait à l'aide d'un système d'amenée de pièces usinées (600) automatisé.

23. Application du procédé selon l'une quelconque des revendications 1 à 16 de mesure de l'homogénéité de couple d'un embrayage humide, d'un embrayage de démarrage ou d'un embrayage à arbre double (300).

24. Application du procédé selon l'une quelconque des revendications 1 à 16 de contrôle de l'homogénéité de couple de systèmes d'embrayage à friction (300) fabriqués au moyen d'un procédé de fabrication en série.

25. Application selon la revendication 24, **caractérisée en ce que** lors du contrôle, l'homogénéité de couple mesurée avec le système d'embrayage à friction (300) fini est comparée à une valeur limite d'homogénéité de couple.

26. Installation de fabrication en série pour des systèmes d'embrayage à friction (300) comportant au moins un système de mesure (400) selon l'une quelconque des revendications 17 à 22.

27. Installation de fabrication en série selon la revendication 26, **caractérisée en ce qu'**au moins un dispositif d'analyse est prévu, à l'aide duquel les différentes homogénéités de couple déterminées au moyen de l'au moins un système de mesure (400) peuvent être comparées à une valeur d'homogénéité de couple prévue au préalable.
